# EUROPEAN PATENT APPLICATION

(11) **EP 4 516 117 A1**
(43) Date of publication of application: **05.03.2025**
(21) Application number: 23796430.9
(22) Date of filing: 26.04.2023
(51) Int. Cl.: A23L 15/00, A23J 3/00, A23L 29/256

(54) **PRODUCTION METHOD OF EGG-LIKE FOOD, AND METHOD FOR FORMING THIN FILM OF EGG-LIKE FOOD**

(30) Priority: 28.04.2022 JP 2022073935
(71) Applicant: Kagome Co., Ltd., Nagoya-shi, Aichi 460-0003 (JP)
(72) Inventor: KUZUHARA Daishi, Tokyo 103-0014 (JP)
(74) Representative: Plasseraud IP
(86) International application number: PCT/JP2023/016452
(87) International publication number: WO 2023/210690

(57) **Abstract**

A production method of an egg-like food according to the present invention includes at least mixing and stirring. In the mixing, at least a plant-derived raw material, a paste material, and a coagulation accelerator are mixed to obtain at least a mixture. During stirring, the mixture is stirred to obtain at least one of a pleat-shaped egg-like food or a thin film-shaped egg-like food. The present invention further includes beating. In the beating, the mixture is beaten at the same time as being stirred.

## Description

### Technical Field

The present invention relates to a production method of an egg-like food and a method for forming a thin film of an egg-like food.

Priority is claimed on Japanese Patent Application No. 2022-073935, filed April 28, 2022, the content of which is incorporated herein by reference.

### Background Art

Even without using animal-derived raw materials, foods with taste and texture similar to those of foods using animal-derived raw materials have been produced. In other words, substitute foods for animal foods are being manufactured from plant raw materials. Specifically, there are meat substitute foods manufactured using plant raw materials without using animal meat, and egg substitute foods manufactured using plant raw materials without using eggs.

So far, various studies have been conducted on egg substitute foods.

Patent Document 1 describes an egg-like baked and set food. Specifically, to produce this egg-like baked and set food while reducing the amount of egg used, a heat coagulable plant protein material and a soy cream raw material are used and coagulated.

Patent Document 2 describes a liquid composition. Specifically, to obtain a texture specific to raw egg yolk while reducing the egg yolk content, a specific amount of egg yolk, milk, sodium alginate, and calcium is contained.

Patent Document 3 describes a production method of a scrambled egg-like food. Specifically, to obtain a scrambled egg-like food without using egg liquid, a starchy vegetable and a soybean protein paste are kneaded.

### Citation List

### Patent Documents

Patent Document 1: Japanese Unexamined Patent Application, First Publication No. 2017-169488
Patent Document 2: Japanese Unexamined Patent Application, First Publication No. 2013-039096
Patent Document 3: Japanese Unexamined Patent Application, First Publication No. 2002-119260

### Summary of Invention

### Technical Problem

The problem to be solved by the present invention is to mass-produce an egg-like food having a thin film shape or a pleat shape. General egg-processed foods exist in various forms. Specifically, the egg-processed foods can take forms such as a sphere like a boiled egg, a thin film like a thin omelet, or a granular shape or a pleat shape like iri-tamago (japanese scrambled egg) or scrambled egg. Also in a case of making egg-like food, it is necessary to make efforts to make the appearance and texture of the egg-like food similar to those of the egg foods described above. In particular, to carry out mass production in a factory or the like, it is necessary to develop a production method for producing a large amount of products with consistent quality.

### Solution to Problem

Based on the above, the present inventors intensively examined egg-like food and found that, (1) in the case of industrially producing an egg-like food containing a gel-like material, stirring of the mixture and crushing of the gel-like material can be efficiently performed and production efficiency can be improved by performing stirring of the mixture containing the gel-like material in a predetermined manner, (2) in a case of producing the gel-like material, the production efficiency can be improved by mixing and adding a coagulation accelerator to the paste material-containing material, (3) a bag-shaped egg-like food in which a liquid part is covered with a gel-like part can be formed by mixing in this order, and (4) a thin film-shaped or a pleat-shaped egg-like food can be formed by opening the bag-shaped egg-like food. From this viewpoint, the present invention is defined as follows.

As one embodiment, the production method of an egg-like food according to the present invention includes at least mixing, stirring, and beating. Here, at least a plant-derived raw material, a paste material, and a coagulation accelerator are mixed to obtain at least a mixture. In addition, the mixture is stirred. Furthermore, the mixture is beaten at the same time as stirring to obtain at least one of a pleat-shaped egg-like food or a thin film-shaped egg-like food.

As another embodiment, the production method of an egg-like food according to the present invention includes at least mixing and stirring. Here, at least a plant-derived raw material, a paste material, and a coagulation accelerator are mixed to obtain at least a mixture. In addition, the mixture is stirred by beating the mixture to obtain at least one of a pleat-shaped egg-like food or a thin film-shaped egg-like food.

In the production method, a direction of action of gravity preferably intersects with an axis of rotation of a force for stirring the mixture. In addition, a horizontal stirrer is preferably used in the stirring.

In the production method, the mixing preferably includes a first mixing and a second mixing. In the first mixing, a plant-derived raw material and a paste material are mixed to obtain a liquid egg-like food. In the second mixing, the liquid egg-like food and the coagulation accelerator are mixed. The second mixing is carried out by mixing the coagulation accelerator with the liquid egg-like food to obtain the mixture.

As another embodiment, the production method of an egg-like food according to the present invention includes at least mixing and a bag opening. Here, at least a plant-derived raw material, a paste material, and a coagulation accelerator are mixed to obtain at least a bag-shaped egg-like food. In addition, the bag-shaped egg-like food is opened to obtain at least one of the pleat-shaped egg-like food or the thin film-shaped egg-like food.

A horizontal direction preferably intersects with a direction in which the force for opening the bag-shaped egg-like food acts. In addition, the mixing preferably includes a first mixing and a second mixing. In the first mixing, a plant-derived raw material and a paste material are mixed to obtain a liquid egg-like food. In the second mixing, the liquid egg-like food and the coagulation accelerator are mixed. The second mixing is carried out by mixing the coagulation accelerator with the liquid egg-like food to obtain the bag-shaped egg-like food.

As another embodiment, the production method of an egg-like food according to the present invention includes at least mixing and stirring. Here, a plant-derived raw material, a paste material, and a coagulation accelerator are mixed to obtain at least a liquid egg-like food and a bag-shaped egg-like food. In addition, the liquid egg-like food and the bag-shaped egg-like food are stirred to obtain at least one of the pleat-shaped egg-like food or the thin film-shaped egg-like food.

A direction of action of gravity preferably intersects with an axis of rotation of a force for stirring the liquid egg-like food and the bag-shaped egg-like food. In addition, a horizontal stirrer is preferably used in the stirring. Furthermore, the mixing preferably includes a first mixing and a second mixing. In the first mixing, a plant-derived raw material and a paste material are mixed to obtain a liquid egg-like food. In the second mixing, the liquid egg-like food and the coagulation accelerator are mixed. The second mixing is carried out by mixing the coagulation accelerator with the liquid egg-like food to obtain the bag-shaped egg-like food.

As another embodiment, the production method of an egg-like food according to the present invention includes at least a first mixing and a second mixing. In the first mixing, a plant-derived raw material and a paste material are mixed to obtain a liquid egg-like food. In the second mixing, the liquid egg-like food and the coagulation accelerator are mixed. The second mixing is carried out by mixing the coagulation accelerator with the liquid egg-like food to obtain the bag-shaped egg-like food. The bag-shaped egg-like food includes a gel-like part and a liquid part, and the gel-like part covers the liquid part.

It is preferable that the total amount of the coagulation accelerator be divided and sequentially mixed. In addition, it is preferable that the paste material be at least an alginate and the coagulation accelerator contain at least calcium or a salt of calcium.

As another embodiment, the method for forming a thin film of an egg-like food according to the present invention includes at least mixing and a bag opening. Here, a plant-derived raw material, a paste material, and a coagulation accelerator are mixed to obtain at least a bag-shaped egg-like food. In addition, the bag-shaped egg-like food is opened to obtain at least one of the pleat-shaped egg-like food or the thin film-shaped egg-like food. A direction of action of gravity preferably intersects with a direction in which the force for crushing the bag-shaped egg-like food acts.

As another embodiment, the method for forming a thin film of an egg-like food according to the present invention includes at least mixing and stirring. Here, a plant-derived raw material, a paste material, and a coagulation accelerator are mixed to obtain at least a bag-shaped egg-like food. In addition, the bag-shaped egg-like food is stirred to obtain at least one of the pleat-shaped egg-like food or the thin film-shaped egg-like food.

A direction of action of gravity preferably intersects with an axis of rotation of a force for stirring the bag-shaped egg-like food. In addition, a horizontal stirrer is preferably used in the stirring.

### Advantageous Effects of Invention

The present invention makes it possible to mass-produce a thin film-shaped egg-like food or a pleat-shaped egg-like food.

### Brief Description of Drawings

FIG. 1 is a schematic cross-sectional view of a bag-shaped egg-like food according to the present embodiment.
FIG. 2 is a photograph of a bag-shaped egg-like food according to the present embodiment.
FIG. 3 is a flowchart of the production method of an egg-like food according to the present embodiment.
FIG. 4 is a photograph of the egg-like food according to the present embodiment, which has a thin film shape and a pleat shape.

### Description of Embodiments

### <Egg food>

In the present specification, the term "egg food" refers to a food that contains, as a main raw material, an egg raw material obtained by uniformly mixing egg white and egg yolk. Specifically, egg foods are rolled omelets, scrambled eggs, omelets, iri-tamago, and the like. Examples of the form of the egg food include a liquid form, a gel form, a solid form, and the like.

### <Egg-like food>

The egg-like food according to the present embodiment (hereinafter, also referred to as "the present egg-like food") is a food in which part or all of the egg raw material in the egg food is substituted with a plant-derived raw material. In addition, the present egg-like food refers to a food that appears to be an egg food or serves as a substitute food for an egg food in its application.

### <Shape of egg-like food>

The present egg-like food contains a thin film-shaped solid or semi-solid material in at least part thereof. Preferably, the thin film-shaped solid or semi-solid material has a pleat shape by being folded and overlapped or by having an uneven thickness of the thin film. The reason the thin film-shaped egg-like food can have a pleat shape is that the egg-like food has moderate softness and elasticity. The thickness of the thin film in the present egg-like food is not particularly limited, but is preferably 0.1 mm to 3 mm. In a case where the present egg-like food has a pleat shape in at least part thereof, the present egg-like food is particularly suitable for the application as scrambled eggs, egg filling, thick omelets, or open-style omelets. Therefore, it is more preferable that the egg-like food have a fluffy texture with suitable softness, in which a plurality of thin films and pleats are provided.

### <Plant-derived raw material>

A plant-derived raw material can be used in the present egg-like food. The plant-derived raw material according to the embodiment of the present invention is a raw material for food, and the origin thereof is a plant. One aspect of the plant-derived raw material is a plant processed product. The plant processed product is a processed product of vegetables, cereals, fruits, or the like. The plant processed product according to the embodiment of the present invention is preferably a juice or a puree of the plant. The types of vegetables are not limited, but examples thereof include tomatoes, turnips, Japanese radishes, spinach, bell peppers, asparagus, barley leaves, crown daisies, mustard spinach, salad greens, Japanese mustard spinach, ashitaba, sweet potatoes, potatoes, moroheiya, paprika, parsley, celery, mitsuba, lettuce, radishes, perilla, eggplant, common beans, pumpkins, burdock, Welsh onions, ginger, garlic, garlic chives, corn, field peas, okra, turnips, cucumbers, gourds, zucchini, loofahs, sprouts, and the like. The types of cereals are not limited, and examples thereof include rice, wheat, barley, oats, soybeans, peas, kidney beans, broad beans, chickpeas, lentils, foxtail millet, Japanese barnyard millet, proso millet, and the like. Examples of the cereal processed product include rice milk, soy milk, oat milk, and the like. The types of fruit are also not limited, and examples thereof include citrus fruits such as lemons, oranges, navel oranges, grapefruits, mandarins, limes, sudachi, yuzu, shikuwasha, and tankan; apples, Japanese ume, peaches, cherries, apricots, plums, prunes, camu-camu fruit, pears, European pears, loquats, strawberries, raspberries, blackberries, cassis, cranberries, blueberries, melons, watermelons, kiwifruits, pomegranates, grapes, bananas, guavas, acerolas, pineapples, mangoes, passion fruits, lychees, and the like. In the present invention, the content of these can be appropriately adjusted. A vegetable or fruit having an egg-like color can also be used.

### <Animal-derived raw material>

An animal-derived raw material can be used in the present egg-like food. The animal-derived raw material according to the embodiment of the present invention is a raw material for food, and the origin thereof is an animal. Examples of the animal-derived raw material include a raw material derived from cattle, pigs, chickens, chicken eggs, sheep, horses, and fish. In the present egg-like food, the use of chicken eggs is not excluded. However, from the viewpoint of minimizing the use of animal-derived raw materials as much as possible, the weight proportion of egg contained in the present egg-like food is preferably 50% by weight or less. The weight proportion is more preferably 20% by weight or less, still more preferably 10% by weight or less, and most preferably 0% by weight.

### <Edible fat and oil>

An edible fat and oil can be used in the present egg-like food. The edible fat and oil according to the embodiment of the present invention are those used for food purposes. The edible fat and oil used in the present invention are preferably derived from plants. Specific examples of the edible fat and oil include linseed oil, perilla oil, olive oil, grape seed oil, corn oil, sesame oil, rice oil, soybean oil, rapeseed oil, palm oil, sunflower oil, safflower oil, cottonseed oil, and the like.

The content of the edible fat and oil in the present egg-like food is not particularly limited. The lower limit value of the content of the edible fat and oil in the present egg-like food is preferably 1% by weight, more preferably 2% by weight, and still more preferably 3% by weight. The upper limit value of the content of the edible fat and oil in the present egg-like food is preferably 20% by weight, more preferably 15% by weight, and still more preferably 10% by weight.

### <Seasoning>

As the raw material of the present egg-like food, the use of seasonings is not excluded in the present invention. The seasoning is a material used to adjust the taste of the dish. Examples of the seasoning include sugar, vinegar, mirin, soy sauce, Worcestershire sauce, salt, umami seasoning, yeast extract, meat extract, and the like. From the viewpoint of not using animal-derived raw materials, it is preferable not to use animal-derived raw materials such as meat and fish extracts. In addition, to avoid artificial taste, it is preferable not to use umami seasoning or yeast extract.

### <Additive>

Various additives may be appropriately added to the present egg-like food. Additives are generally added to foods and drinks and examples thereof include a sweetener, an acidifier, a coloring material, a pH adjuster, an antioxidant, a flavoring agent, a thickening agent, a coagulant, an emulsifier, and the like. To obtain an egg-like color, a coloring agent can be used. From the viewpoint of not using food additives, it is preferable to minimize the use of such additives as much as possible.

### <Paste material>

On the other hand, from the viewpoint of producing baked egg-like foods such as rolled omelets, scrambled eggs, and iri-tamago as an egg-like food, a paste material is preferably used. The paste material is a polymer substance that dissolves or disperses in water to generate viscosity. The paste material is called a "thickening agent" used for the purpose of thickening, a "gelling agent" used for the purpose of gelling, a "stabilizer" or a "thickening stabilizer" used for the purpose of increasing the viscosity to stabilize the food component uniformly, or the like.

The paste material that can be used in the present egg-like food is not particularly limited, and examples thereof include pectin, agar, starch, processed starch, carrageenan, guar gum, locust bean gum, galactomannan, alginate, Arabic gum, cellulose, gelatin, and the like.

### <Alginate>

An alginate can be used as the thickening agent or the gelling agent according to the embodiment of the present invention. Specific examples of the alginate include sodium alginate, potassium alginate, ammonium alginate, and the like.

### <Calcium or salt thereof>

It is preferable that calcium or a salt thereof be used and be contained in the coagulation accelerator according to the embodiment of the present invention. Specific examples of calcium or a salt thereof include at least one or more of eggshell calcium, shell calcium, calcium lactate, calcium gluconate, calcium fumarate, calcium citrate, calcium succinate, calcium acetate, calcium chloride, calcium hydroxide, and the like.

In a case where the present egg-like food is assumed to be a scrambled egg-like food, the preferred thickening agent or gelling agent is sodium alginate and the preferred coagulation accelerator is calcium lactate. By using the thickening agent or gelling agent and the coagulation accelerator, it is possible to obtain a very similar texture as when making scrambled eggs with real eggs.

### <Liquid egg-like food>

A liquid egg-like food according to the present embodiment is a raw material serving as a base material for producing an egg-like food. The liquid egg-like food contains at least a paste material. The paste material is preferably an alginate. Here, in the liquid egg-like food, the concentration of the alginate is preferably 0.2% by weight or more and 1.5% by weight. More preferably, the concentration of the alginate is 0.5% by weight or more and 1.5% by weight or less. Still more preferably, the concentration of the alginate is 0.65% by weight or more and 1.5% by weight or less. The alginate is preferably sodium alginate. In addition, as substances contained in the liquid egg-like food, the animal-derived raw material, the plant-derived raw material, the seasoning, the additive, and the like are not excluded. As described above, from the viewpoint of not using animal-derived raw materials, it is preferable not to contain animal-derived ingredients.

### <Coagulation accelerator>

A coagulation accelerator according to the present embodiment accelerates thickening or coagulation of the liquid egg-like food. Preferably, the coagulation accelerator contains at least calcium or a salt thereof. Here, the weight ratio ([B]/[A]) of the amount ([B]) of the calcium or a salt thereof contained in the coagulation accelerator to the amount ([A]) of the sodium alginate contained in the liquid egg-like food is preferably 0.15 or more and 1.0 or less. More preferably, the weight ratio is 0.2 or more and 0.8 or less. Still more preferably, the weight ratio is 0.6 or more and less than 0.8. In addition, the concentration of calcium or a salt thereof in the coagulation accelerator is preferably 0.5% by weight or more and 5.0% by weight or less. More preferably, the concentration is 0.5% by weight or more and 2.0% by weight or less. Still more preferably, the concentration is 0.8% by weight or more and 2.0% by weight or less. As substances contained in the coagulation accelerator, the animal-derived raw material, the plant-derived raw material, the seasoning, the additive, and the like are not excluded. As described above, from the viewpoint of not using animal-derived raw materials, it is preferable not to contain animal-derived ingredients.

### <Mixture>

In the present invention, a mixture is obtained by mixing at least a plant-derived raw material, a liquid egg-like food containing a paste material, and a coagulation accelerator. The mixture contains at least a gel-like material and, preferably, a bag-shaped egg-like food formed by mixing described later. The mixture may contain the bag-shaped egg-like food, a gel-like material, and a liquid material such as a coagulation accelerator and a liquid egg-like food.

### <Bag-shaped egg-like food>

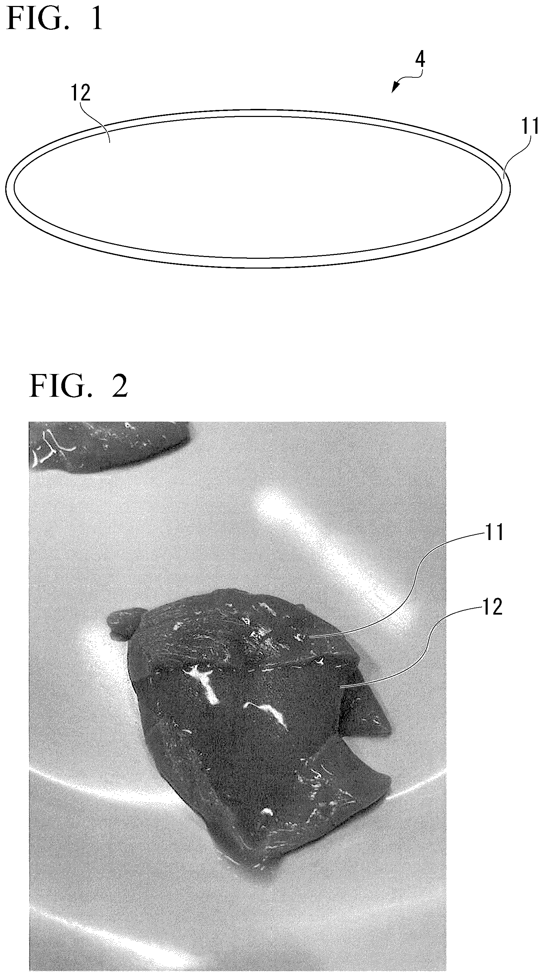

As shown in FIGS. 1 and 2, a bag-shaped egg-like food 4 according to the embodiment of the present invention includes a gel-like part 11 and a liquid part 12. The liquid part is liquid and contains plant-derived raw materials from the liquid egg-like food and a paste material. In addition, the gel-like part is a gel-like material and contains a gelled portion generated by mixing the liquid egg-like food and the coagulation accelerator. The liquid part is covered by the gel-like part. A shape of the bag-shaped egg-like food is not particularly limited and may be substantially spherical.

### <Configuration of the present production method of an egg-like food>

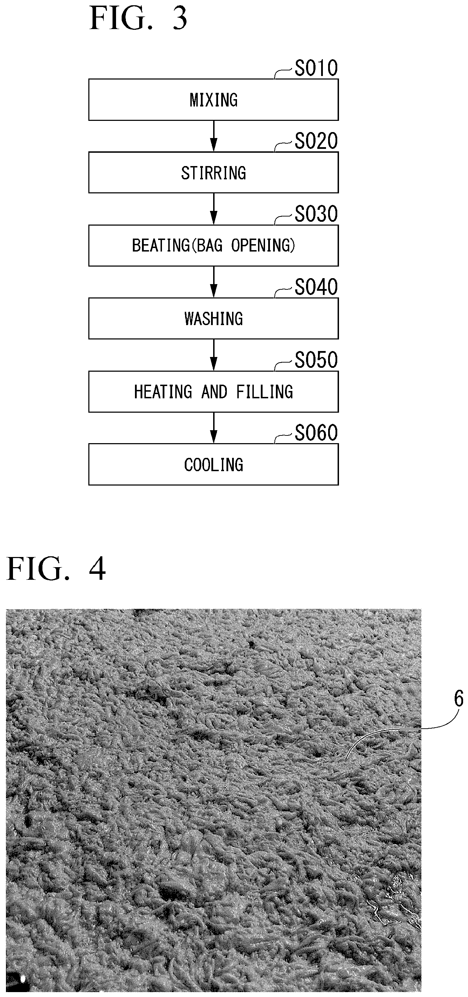

As shown in FIG. 3, the present production method of an egg-like food (hereinafter, also referred to as "the present production method" in this section) includes mixing (S010), stirring (S020), beating or bag opening (S030), washing (S040), heating and filling (S050), and cooling (S060).

### <Mixing (S010)>

Here, at least a plant-derived raw material, a paste material, and a coagulation accelerator are mixed to obtain at least any one of a mixture, a bag-shaped egg-like food, or a liquid egg-like food.

In addition, the mixing may be divided into a first mixing and a second mixing. In this case, in the first mixing, the plant-derived raw material and the paste material are mixed to obtain the liquid egg-like food. The liquid egg-like food is preferably stored in an apparatus having a storage function. The apparatus having a storage function referred to herein may be an apparatus having a container or the like. Preferably, the apparatus is a device. More preferably, the device is a kneader. In a case where the liquid egg-like food is stored in the storage apparatus, it is preferable that the distance from the liquid level to the bottom surface of the apparatus be 10 cm or more. More preferably, the distance is 30 cm or more. The upper limit of the distance from the liquid level of the stored liquid egg-like food to the bottom surface of the apparatus is not particularly limited, but is preferably 3 m and more preferably 2 m or less.

In the second mixing, the liquid egg-like food and the coagulation accelerator are mixed. The second mixing is carried out by mixing the coagulation accelerator with the liquid egg-like food. In other words, the second mixing is carried out by gradually charging the coagulation accelerator into the liquid egg-like food.

A preferred method of charging the coagulation accelerator is to pour in a small amount at the beginning of charging. This is because, in a case where a large amount of the coagulation accelerator is charged into the liquid egg-like food containing a paste material in a short period of time, the reaction product by the paste material and the coagulation accelerator forms small gels, thereby making it difficult to form the bag-shaped egg-like food. By the preferred method of charging, the bag-shaped egg-like food and liquid egg-like food, or a mixture, can be efficiently obtained. In addition, the coagulation accelerator may be charged into a part other than the surface part of the egg-like food material. This is because the bag-shaped egg-like food is less likely to be destroyed due to gravity.

### <Stirring (S020)>

In the embodiment of the present invention, the purpose of stirring is to accelerate the mixing. Here, the mixture is stirred. By stirring, the gelation of the paste material and the coagulation accelerator is accelerated, and the bag-shaped egg-like food is formed. A direction of action of gravity preferably intersects with an axis of rotation of a force for stirring the liquid egg-like food and the bag-shaped egg-like food. In a case where the direction of action of gravity intersects with the rotation axis of the force for stirring, it is possible to strike the stirring medium against the liquid surface, thereby obtaining a thin film-shaped egg-like food and further a plurality of egg-like food having a pleat shape. In the method, the plurality of bag-shaped egg-like food floating on the liquid surface and the gel-like material are subjected to an impact, thereby the gel-like material can be crushed.

It is more preferable to use a horizontal stirrer for the stirring. By using the horizontal stirrer, a direction of action of gravity is possible to intersect with an axis of rotation of a force for stirring the bag-shaped egg-like food and liquid egg-like food, or the mixture, thereby making it easier to stir. Furthermore, the rotation speed of the horizontal stirrer in the stirring is more preferably 5 to 20 rpm.

### <Beating or bag opening (S030)>

The purpose of the beating or the bag opening is to form at least one of the pleat-shaped egg-like food or the thin film-shaped egg-like food. Here, at least the mixture obtained by mixing the liquid egg-like food and the coagulation accelerator is beaten or opened. Preferably, at least a gel-like material is beaten or opened, and particularly a bag-shaped egg-like food is beaten or opened. By the beating or the bag opening, the gel-like part of the mixture or the gel-like part of the bag-shaped egg-like food collapses, and the gel-like part is formed into a thin film-shaped egg-like food. At the same time, the liquid part that has been covered by the gel-like part of the bag-shaped egg-like food is exposed. The gelation of the exposed liquid part is accelerated by a reaction with calcium or a salt thereof. As a result of the above-described action, while a thin film-shaped egg-like food is formed, scrambled egg-like unique wrinkles and thickness and a soft-boiled egg-like shape are also formed.

The bag-shaped egg-like food may be taken out and then beaten or opened at another place to obtain a thin film-shaped egg-like food. It is still preferable to use the horizontal stirrer in the beating or the bag opening. By using the horizontal stirrer, the direction of action of gravity intersects with the rotation axis of the force for stirring, thereby allowing the stirring medium to be struck against the liquid surface. As a result, the stirring medium can be struck against the liquid surface at least in the vertical direction or the oblique direction, and the horizontal direction intersects with the direction in which the force for opening the bag-shaped egg-like food acts, thereby the bag-shaped egg-like food is easier to be beaten or opened. Therefore, the apparatus used here is preferably a horizontal kneader. On the other hand, in a case where a vertical stirrer is used, the stirring medium moves horizontally with respect to the liquid surface, causing the bag-shaped egg-like food and the gel-like material to move only in the direction of the water flow, thereby it is difficult to beat or open. Furthermore, the rotation speed of the horizontal stirrer in the beating or the bag opening is more preferably 5 to 20 rpm.

It is preferable that the stirring and the beating (or the bag opening) be carried out at the same time. Alternatively, it is preferable to carry out the beating (bag opening) by stirring. That is, the stirring medium for stirring and the beating (bag opening) medium for beating (or opening the bag) are different from each other, and the beating (or bag opening) may be carried out by another medium in parallel with the stirring by one medium. Alternatively, the stirring medium for stirring and the beating (bag opening) medium for beating (or opening the bag) may be the same, and the stirring and beating (or bag opening) may be carried out by the same medium.

The stirring medium refers to a stirring arm or blade used in a stirrer. In addition, the beating (or bag opening) medium may be the same as the stirring medium, or it may be a medium different from the stirring medium, such as a needle-like substance that can beat (or open) the bag-shaped egg-like food.

### <Washing (S040)>

The present production method appropriately employs washing. The purpose of washing is to remove excess moisture and excess solution, as well as to adjust the taste. The mixed solution may contain the coagulation accelerator that did not contribute to gelation. The gel-like part can be collected by removing the solution containing the coagulation accelerator. In addition, since the coagulation accelerator contains calcium or a salt thereof, bitterness may be felt when the coagulation accelerator is ingested. Therefore, by washing the gel-like part with water or similar means, it is possible to reduce any bitterness derived from calcium.

### <Heating and filling (S050)>

The present production method appropriately employs heating and filling. The order of heating and filling is not particularly limited. One of the purposes of heating is sterilization of the egg-like food. The heating method may be a known method, such as a tubular sterilization method, a hot pack sterilization method, retort heating, and the like. In addition, the present production method appropriately employs filling. The filling method may be a known method. The container in which the present egg-like food is filled (packed) may be a known container, and examples thereof include a vinyl container, a can, a bottle, a paper container, a PET container, and the like.

### <Cooling (S060)>

The present production method appropriately employs cooling. The cooling method may be a known method.

### <Temperature and reaction time>

An apparatus internal temperature in the apparatus having a storage function is not particularly limited, but is preferably 10°C to 50°C. In addition, the time for mixing the liquid egg-like food containing the thickening agent or gelling agent with the coagulation accelerator and allowing it to react is not particularly limited, but is preferably 5 minutes to 30 minutes.

### <pH>

A pH of the raw material for an egg-like food or the egg-like food according to the embodiment of the present invention is not particularly limited, but from the viewpoint of taste and gel reactivity, the pH is preferably 5.0 or more and 7.0 or less and more preferably 5.5 or more and 6.5 or less.

### [Examples]

To find suitable production conditions for a method for forming a thin film of egg-like food, a thin film-shaped egg-like food, and a production method thereof, the following tests (hereinafter, also referred to as "the present test") were performed.

### <Test method>

### [Comparative Example 1]

A calcium lactate solution was put into a storage tank of a kneader, and then a liquid egg-like food containing at least vegetable juice, a kidney bean processed product, processed starch, vegetable oil, and sodium alginate was sequentially added thereto, and the mixture was stirred by the kneader at a predetermined rotation speed. A temperature in the storage tank was approximately 28°C, which was room temperature. A concentration of calcium lactate in the calcium lactate solution was 0.80% by weight, and a concentration of sodium alginate in the liquid egg-like food was 1.00% by weight, and the mixture was stirred using a horizontal kneader.

### [Test Example 1 to Test Example 9]

In a storage tank of a kneader, vegetable juice, a kidney bean processed product, processed starch, and vegetable oil, which were the same as in Comparative Example 1, were mixed and further sodium alginate at each concentration and amount was mixed to adjust a liquid egg-like food. A calcium lactate solution was sequentially added thereto, and the mixture was stirred at a predetermined rotation speed using a kneader. The temperature in the storage tank was approximately 28°C, which was room temperature, and the reaction time due to the mixing of each liquid was 10 minutes.

The charging amounts of the liquid egg-like food containing sodium alginate and the concentrations of sodium alginate in the liquid egg-like food in Test Examples 1 to 9 are shown in Table 1. In addition, the charging amounts of the calcium lactate solution and the concentrations of calcium lactate in the solution in Test Examples 1 to 9 are shown in Division 1 to Division 9 of Table 1.

**[Table 1]**

| | | | Secti on 1 | Secti on 2 | Secti on 3 | Secti on 4 | Secti on 5 | Secti on 6 | Secti on 7 | Secti on 8 | Secti on 9 |
|---|---|---|---|---|---|---|---|---|---|---|---|
| Device | | | Horizontal kneader | | | Vertic al knead er | Horizontal kneader | | | | |
| Input amount | Liquid egg-like food containi ng sodium alginate [kg] | 0.65 % by weig ht | | | | | | | 5 | 120 | 120 |
| | | 1.00 % by weig ht | 5 | 5 | 5 | 5 | | 5 | | | |
| | | 1.50 % by weig ht | | | | | 5 | | | | |
| | Calciu m lactate solution [kg] | 0.80 % by weig ht | 5 | 3 | 1.3 | 1.3 | 1.3 | | | | |
| | | 1.00 % by weig ht | | | | | | 1.3 | | | |
| | | 1.50 % by weig ht | | | | | | | 1.3 | 30 | |
| | | 2.00 % by weig ht | | | | | | | | | 30 |
| | Weight ratio ([B]/[A]) of amount ([B]) of calcium or salt thereof contained in coagulation accelerator to amount ([A]) of sodium alginate contained in liquid egg-like food | | 0.800 | 0.480 | 0.208 | 0.208 | 0.139 | 0.260 | 0.600 | 0.577 | 0.769 |
| Evaluati on | Presence or absence of formation of thin film-shaped egg-like food | | A | A | A | C | A | A | A | A | A |
| | Presence or absence of | | A | A | A | C | A | A | A | A | A |
| | formation of pleat shape | | | | | | | | | | |
| | Stable productivity of formed pleats, and suitability of egg-like hardness | C | B | A | C | C | B | A | B | A | |

### <Evaluation>

The evaluation was performed by a sensory evaluation based on visual observation and texture in terms of the presence or absence of the formation of a thin film-shaped egg-like food, the presence or absence of the formation of a pleat shape, the stable productivity of formed pleats, and the suitability of egg-like hardness. Regarding the presence or absence of the formation of a thin film-shaped egg-like food, a section in which a thin film-shaped egg-like food was formed was defined as "A", and a section in which a thin film-shaped egg-like food was not formed was defined as "C". Regarding the presence or absence of the formation of a pleat shape, a section in which a pleat was formed was defined as "A", and a section in which a pleat was not formed was defined as "C". Regarding the stable productivity of formed pleats and the suitability of egg-like hardness, the case in which both were within a suitable range for scrambled eggs was defined as "A", the case in which the production was difficult but possible, or the texture was slightly harder or softer than scrambled eggs but within a tolerable range was defined as "B", and the case in which either the production or the texture was not within a tolerable range was defined as "C."

### <Results>

In the present test, in Comparative Example 1, the addition of the liquid egg-like food caused gelation immediately, thereby an egg-like food having a thin film shape and a pleat shape could not be produced. Although it is not impossible, it is necessary to strictly control the addition amount, making mass production in a factory or the like difficult. On the other hand, in Test Examples 1 to 3 and 5 to 9, an egg-like food having a thin film shape and a pleat shape was produced. In these test examples, during production, a bag-shaped egg-like food having a gel-like part and a liquid part was formed. On the other hand, in Test Example 4 using the vertical kneader, the liquid part and the gel-like part in the mixed solution moved together in the stirring direction, and an egg-like food having a thin film shape and a pleat shape was not produced.

From the viewpoints of stable productivity of the formed pleats and suitability of the egg-like hardness, a preferable state was achieved in Examples 2, 3, and 6 to 9. More preferable states were achieved in Test Examples 3, 7, and 9.

The present test revealed the following. That is, when stirring the mixture of the liquid egg-like food and the coagulation accelerator, as represented by the horizontal kneader, it was found that by intersecting the direction of action of gravity with the rotation axis of the force for stirring the mixture, it was easy to produce an egg-like food having a thin film shape and a pleat shape.

In addition, it was found that, in the mixing method of the liquid egg-like food and the coagulation accelerator, by mixing the coagulation accelerator with the liquid egg-like food, it was easy to form an egg-like food having a thin film shape and a pleat shape.

It was found that by performing the method, a bag-shaped egg-like food was formed. The bag-shaped egg-like food had a gel-like part and a liquid part, and the liquid part was covered with the gel-like part. It was found that the bag-shaped egg-like food was opened by stirring or beating, thereby forming an egg-like food having a thin film shape and a pleat shape (FIG. 4).

In the liquid egg-like food, considering the ability to form a bag-shaped egg-like food and the formation of an egg-like food with a thin film shape and a pleat shape, the concentration of sodium alginate was preferably in the range of 0.2% by weight or more and 1.5% by weight or less. More preferably, the concentration was in a range of 0.5% by weight or more and 1.5% by weight or less. In addition, considering good texture as an egg-like food, the concentration was preferably 0.5% by weight or more, and 1.5% by weight or less was preferable.

Considering the ability to form a bilayer structure and the formation an the egg-like food having a thin film shape and a pleat shape, the concentration of calcium and a salt thereof in the coagulation accelerator was preferably 0.5% by weight or more and 5.0% by weight or less. More preferably, the concentration was 0.8% by weight or more and 2.0% by weight or less.

Considering the ability to form a bag-shaped egg-like food and the formation of an egg-like food having a thin film shape and a pleat shape, a weight ratio of the calcium or a salt thereof contained in the coagulation accelerator to the sodium alginate contained in the liquid egg-like food was preferably 0.15 or more and 1.0 or less. More preferably, the weight ratio was 0.2 or more and less than 0.8.

As an apparatus for stirring, a horizontal stirrer was preferable. In addition, considering the ability to form a bag-shaped egg-like food of a size suitable for a thin film-shaped egg-like food and the formation efficiency of a thin film-shaped egg-like food, the rotation speed of the horizontal kneader was preferably 5 to 20 rpm.

### Industrial Applicability

A useful field of the present invention is the production and sale of egg-like food.

### Reference Signs List

4: Bag-shaped egg-like food
11: Gel-like part
12: Liquid part
6: Egg-like food having a thin film shape and a pleat shape

## Claims

1. A production method of an egg-like food, comprising at least the following steps:
a mixing: mixing at least a plant-derived raw material, a paste material, and a coagulation accelerator to obtain at least a mixture;
a stirring: stirring the mixture; and
a beating: beating the mixture at the same time as stirring to obtain at least one of a pleat-shaped egg-like food or a thin film-shaped egg-like food.

2. A production method of an egg-like food, comprising at least the following steps:
a mixing: mixing at least a plant-derived raw material, a paste material, and a coagulation accelerator to obtain at least a mixture; and
a stirring: stirring the mixture by beating the mixture to obtain at least one of a pleat-shaped egg-like food or a thin film-shaped egg-like food.

3. The production method according to Claim 1 or 2,
wherein a direction of action of gravity intersects with an axis of rotation of a force for stirring the mixture.

4. The production method according to Claim 3,
wherein a horizontal stirrer is used in the stirring.

5. The production method according to Claim 1 or 2,
wherein the mixing includes the following steps:
a first mixing: mixing the plant-derived raw material and the paste material to obtain a liquid egg-like food, and
a second mixing: mixing the liquid egg-like food and the coagulation accelerator, in which the second mixing is carried out by mixing the coagulation accelerator with the liquid egg-like food, to obtain the mixture.

6. A production method of an egg-like food, comprising at least the following steps:
a mixing: mixing at least a plant-derived raw material, a paste material, and a coagulation accelerator to obtain at least a bag-shaped egg-like food; and
a bag opening: opening the bag-shaped egg-like food to obtain at least one of a pleat-shaped egg-like food or a thin film-shaped egg-like food.

7. The production method according to Claim 6,
wherein a horizontal direction intersects with a direction in which a force for opening the bag-shaped egg-like food acts.

8. The production method according to Claim 6 or 7,
wherein the mixing includes the following steps:
a first mixing: mixing the plant-derived raw material and the paste material to obtain a liquid egg-like food, and
a second mixing: mixing the liquid egg-like food and the coagulation accelerator, in which the second mixing is carried out by mixing the coagulation accelerator with the liquid egg-like food, to obtain the bag-shaped egg-like food.

9. A production method of an egg-like food, comprising at least the following steps:
a mixing: mixing a plant-derived raw material, a paste material, and a coagulation accelerator to obtain at least a liquid egg-like food and a bag-shaped egg-like food; and
a stirring: stirring the liquid egg-like food and the bag-shaped egg-like food to obtain at least one of a pleat-shaped egg-like food or a thin film-shaped egg-like food.

10. The production method according to Claim 9,
wherein a direction of action of gravity intersects with an axis of rotation of a force for stirring the liquid egg-like food and the bag-shaped egg-like food.

11. The production method according to Claim 10,
wherein a horizontal stirrer is used in the stirring.

12. The production method according to any one of Claims 9 to 11,
wherein the mixing includes the following steps
a first mixing: mixing a plant-derived raw material and a paste material to obtain a liquid egg-like food, and
a second mixing: mixing the liquid egg-like food and the coagulation accelerator, in which the second mixing is carried out by mixing the coagulation accelerator with the liquid egg-like food, to obtain the bag-shaped egg-like food.

13. A production method of an egg-like food, comprising at least the following steps:
a first mixing: mixing a plant-derived raw material and a paste material to obtain a liquid egg-like food; and
a second mixing: mixing the liquid egg-like food and a coagulation accelerator, in which the second mixing is carried out by mixing the coagulation accelerator with the liquid egg-like food, to obtain a bag-shaped egg-like food,
wherein the bag-shaped egg-like food includes a gel-like part and a liquid part, and the gel-like part covers the liquid part.

14. The production method according to Claim 13,
wherein a total amount of the coagulation accelerator is divided and sequentially mixed.

15. The production method according to Claim 13 or 14,
wherein the paste material is at least an alginate, and
the coagulation accelerator contains at least calcium or a salt of calcium.

16. A method for forming a thin film of an egg-like food, comprising at least the following steps:
a mixing: mixing a plant-derived raw material, a paste material, and a coagulation accelerator to obtain at least a bag-shaped egg-like food; and
a bag opening: opening the bag-shaped egg-like food to obtain at least one of a pleat-shaped egg-like food or a thin film-shaped egg-like food.

17. The method according to Claim 16,
wherein a direction of action of gravity intersects with a direction in which a force for opening the bag-shaped egg-like food acts.

18. A method for forming a thin film of an egg-like food, comprising at least the following steps:
a mixing: mixing a plant-derived raw material, a paste material, and a coagulation accelerator to obtain at least a bag-shaped egg-like food; and
a stirring: stirring the bag-shaped egg-like food to obtain at least one of a pleat-shaped egg-like food or a thin film-shaped egg-like food.

19. The method according to Claim 18,
wherein a direction of action of gravity intersects with an axis of rotation of a force for stirring the bag-shaped egg-like food.

20. The production method according to Claim 19,
wherein a horizontal stirrer is used in the stirring.
